# EUROPEAN PATENT APPLICATION

(11) **EP 4 105 787 A1**
(43) Date of publication of application: **21.12.2022**
(21) Application number: 21760068.3
(22) Date of filing: 22.01.2021
(51) Int. Cl.: G06F 15/163

(54) **PROCESSOR COMMUNICATION METHOD AND APPARATUS, ELECTRONIC DEVICE, AND COMPUTER-READABLE STORAGE MEDIUM**

(30) Priority: 27.02.2020 CN 202010124376
(71) Applicant: GUANGDONG OPPO MOBILE TELECOMMUNICATIONS CORP., LTD., Dongguan, Guangdong 523860 (CN)
(72) Inventor: LI, Dingyi, Dongguan, Guangdong 523860 (CN)
(74) Representative: Penza, Giancarlo
(86) International application number: PCT/CN2021/073181
(87) International publication number: WO 2021/169690

(57) **Abstract**

Provided is a processor communication method, comprising: when a downlink data packet is detected, a first processor sending a main control interruption signal to a second processor; the first processor receiving a controlled response signal returned by the second processor based on the main control interruption signal; and the first processor sending the downlink data packet to the second processor based on the controlled response signal, and resetting the main control interruption signal after the sending is completed, wherein the reset main control interruption signal is used for instructing the second processor to reset the controlled response signal after the processing of the downlink data packet is completed.

## Description

### CROSS-REFERENCE TO RELATED APPLICATION

The application claims priority to a Chinese patent application No. 202010124376.9 filed in the China National Intellectual Property Administration on February 27, 2020, titled "PROCESSOR COMMUNICATION METHOD AND APPARATUS, ELECTRONIC DEVICE, AND COMPUTER-READABLE STORAGE MEDIUM". The entire contents of the aforementioned application are incorporated herein by reference.

### TECHNICAL FIELD

The disclosure relates to the field of computer technologies, and particularly to a processor communication method, a processor communication apparatus, an electronic device, and a computer-readable storage medium.

### BACKGROUND

With the development of computer technologies, applications of electronic devices such as mobile phones, personal computers, and smart watches are becoming more and more widespread. In order to further improve performance of the electronic devices, there appeared electronic devices provided with multiple processors for running multiple systems, thereby implementing different service functions through the different systems. In practice, the implementations of some service functions rely on communication between the multiple processors. However, the communication between processors in existing technologies has a problem of large time delay.

### SUMMARY

According to various embodiments of the disclosure, a processor communication method, a processor communication apparatus, an electronic device and a computer-readable storage medium are provided.

The processor communication method is implemented by an electronic device, the electronic device includes a first processor and a second processor. The method includes the operations as follows.

The first processor transmits a master interrupt signal to the second processor, in response to detecting a downlink packet.

The first processor receives a slave acknowledge signal returned from the second processor based on the master interrupt signal.

The first processor transmits the downlink packet to the second processor based on the slave acknowledge signal, and resets the master interrupt signal after completion of the transmitting of the downlink packet to obtain a reset master interrupt signal; where the reset master interrupt signal is configured to instruct the second processor to reset the slave acknowledge signal after completion of processing the downlink packet is completed.

The processor communication apparatus is applied to an electronic device, and the electronic device includes a first processor and a second processor. The apparatus includes an interrupt notification module, an acknowledge receiving module and a data transmitting module.

The interrupt notification module is configured to transmit a master interrupt signal to the second processor, in response to detecting a downlink packet by the first processor.

The acknowledge receiving module is configured to receive a slave acknowledge signal returned from the second processor based on the master interrupt signal by the first processor. The data transmitting module is configured to transmit the downlink packet to the second processor based on the slave acknowledge signal, and reset the master interrupt signal after the completion of the transmitting of the downlink packet to obtain a reset master interrupt signal, by the first processor; where the reset master interrupt signal is configured to instruct the second processor to reset the slave acknowledge signal after completion of processing the downlink packet.

An electronic device includes a memory, a first processor, and a second processor. The memory is stored with a computer program, and the computer program is configured to, when executed by the first processor and the second processor, cause the first processor and the second processor to implement the operations as follows.

The first processor transmits a master interrupt signal to the second processor, in response to detecting a downlink packet.

The first processor receives a slave acknowledge signal returned from the second processor based on the master interrupt signal.

The first processor transmits the downlink packet to the second processor based on the slave acknowledge signal, and resets the master interrupt signal after the completion of the transmitting of the downlink packet to obtain a reset master interrupt signal; where the reset master interrupt signal is configured to instruct the second processor to reset the slave acknowledge signal after completion of processing the downlink packet.

A computer-readable storage medium is stored with a computer program. The computer program is configured to, when executed by a processor, implement the operations as follows.

The first processor transmits a master interrupt signal to the second processor, in response to detecting a downlink packet.

The first processor receives a slave acknowledge signal returned from the second processor based on the master interrupt signal.

The first processor transmits the downlink packet to the second processor based on the slave acknowledge signal, and resets the master interrupt signal after the transmitting of the downlink packet is completed; where the reset master interrupt signal is configured to instruct the second processor to reset the slave acknowledge signal after processing of the downlink packet is completed.

According to the above processor communication method and apparatus, the electronic device, and the computer-readable storage medium, the first processor may transmit, in response to detecting the downlink packet, the master interrupt signal to the second processor; the first processor receives a slave acknowledge signal returned from the second processor based on the master interrupt signal; the first processor transmits the downlink packet to the second processor based on the slave acknowledge signal, and resets the master interrupt signal after completion of the transmitting of the downlink packet; where the reset master interrupt signal is configured to instruct the second processor to reset the slave acknowledge signal after completion of processing the downlink packet. In other words, the packet is transmitted in response to receiving the slave acknowledge signal, and the master interrupt signal is reset after completion of the transmitting to obtain the reset master interrupt signal, where the reset master interrupt signal represents that a single data transmission has been completed. As such, time delay of the processor communication can be reduced.

### BRIEF DESCRIPTION OF THE DRAWINGS

In order to more clearly illustrate technical solutions in embodiments of the disclosure or in the related art, drawings used in the description of the embodiments or the related art will be briefly described below. Apparently, the drawings in the following description are merely some embodiments of the disclosure. For those skilled in the art, other drawings may also be obtained based on these drawings without paying any creative work.
FIG. 1 is a schematic diagram illustrating a hardware framework of an electronic device according to some embodiments.
FIG. 2 is a flowchart illustrating a processor communication method according to some embodiments.
FIG. 3 is a flowchart of transmitting downlink packet based on a preset data volume according to some embodiments.
FIG. 4 is a flowchart of acquiring a downlink packet according to some embodiments.
FIG. 5 is another flowchart illustrating a processor communication method according to some embodiments.
FIG. 6 is a schematic sequence diagram illustrating a processor communication method according to some embodiments.
FIG. 7 is another schematic sequence diagram illustrating a processor communication method according to some embodiments.
FIG. 8 is a schematic block diagram illustrating a processor communication apparatus according to some embodiments.
FIG. 9 is a schematic diagram illustrating a software framework of a wearable device according to some embodiment.
FIG. 10 is a schematic diagram illustrating a hardware framework of the wearable device provided in FIG. 9.

### DETAILED DESCRIPTION

In order to more clearly illustrate purposes, technical solution, advantages of the disclosure, the disclosure will be described in detail with reference to the drawings and embodiments. It should be understood that detailed embodiments provided herein are only used to explain but not to limit the disclosure.

It should be understood that the terms "first", "second" and the like used in the disclosure are configured to describe various elements and components, but are not intended to limit these components. These terms are only used to distinguish a first element or component from another element or component. For example, without departing from the scope of the disclosure, a first processor may be referred to as a second processor, and similarly, the second processor may be referred to as the first processor. Both the first processor and the second processor are clients, but they are not the same processor.

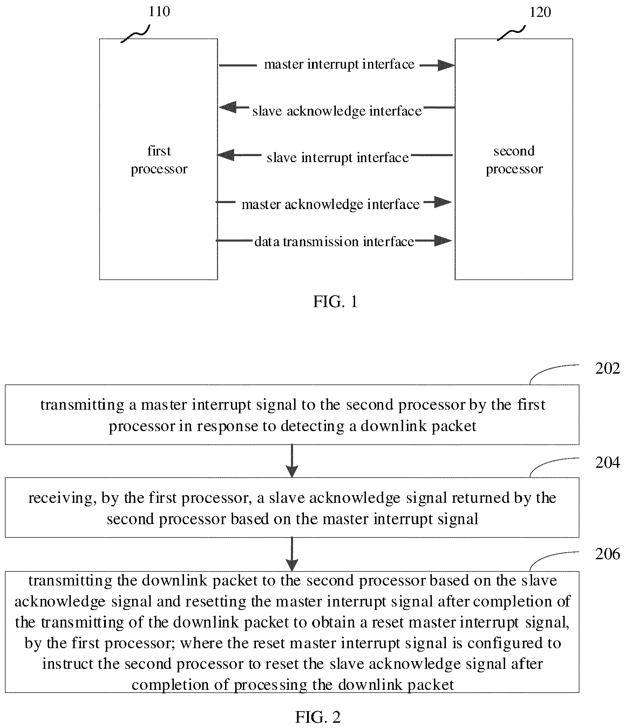

FIG. 1 is a schematic diagram illustrating a hardware framework of an electronic device according to some embodiments. As illustrated in FIG. 1, the electronic device includes a first processor 110 and a second processor 120. The first processor 110 and the second processor 120 are both microprocessors, and the first processor 110 is a core processor. The first processor 110 and the second processor 120 may be configured with corresponding microprocessors in practice, and the first processor 110 and the second processor 120 are not limited herein. The first processor 110 and the second processor 120 integrate different operating systems respectively, and power consumption of the first system integrated on the first processor 110 is higher than power consumption of the second system integrated on the second processor 120. For example, the first processor 110 may be a central process unit (CPU) processor, and a first system corresponding to the first processor 110 may be an Android system; the second processor 120 may be a microcontroller unit (MCU) processor, and a second system corresponding to the second processor 120 may be a real time operating system (RTOS). The electronic device may be a smart phone, a personal computer, a wearable device, etc., but not limited to these.

The first processor 110 and the second processor 120 are connected through a master interrupt interface, a slave acknowledge interface, a slave interrupt interface, a master acknowledge interface, and a data transmission interface. The electronic device may implement the transmission of the downlink packet through the master interrupt interface, the slave acknowledge interface, and the data transmission interface. Specifically, the master interrupt interface is configured to transmit the master interrupt signal, the slave acknowledge interface is configured to transmit the slave acknowledge signal; and the data transmission interface is configured to transmit the downlink packet. The electronic device may also implement the transmission of the uplink packet through the slave interrupt interface, the master acknowledge interface, and the data transmission interface. Specifically, the slave interrupt interface is configured to transmit the slave interrupt signal, the master acknowledge interface is configured to transmit the master interrupt signal, and the data transmission interface is configured to transmit the uplink packet.

FIG. 2 is a flowchart illustrating a processor communication method according to some embodiments. The processor communication method according to the embodiments is described by taking the method implemented on the above electronic device as an example. As illustrated in FIG.2, the processor communication method includes blocks 202 to 206.

At block 202, a first processor transmits a master interrupt signal to a second processor, in response to detecting a downlink packet.

The downlink packet refers to a data packet that requires to be transmitted to the second processor by the first processor. The downlink packet may include at least one of an operation instruction and service data which are received or generated by the first processor. The operation instruction may be configured to instruct the second processor to perform a corresponding service operation, in response to the operation instruction has been transmitted to the second processor. The service data is configured to provide a data support for the second processor to execute the service operation corresponding to the service data, in response to the service data has been transmitted to the second processor. For example, when the second processor provides a positioning calculation function, the first processor may receive sensor data sent by a connected terminal, and generate the downlink packet for the received sensor data; alternatively, the first processor may generate the downlink packet based on a detected network signal and signal intensity thereof, so as to provide data support for the positioning calculation function of the second processor.

The master interrupt signal is configured to interrupt and instruct the second processor that there is the downlink data required to be transmitted to the second processor. Specifically, upon detecting the downlink packet, the first processor of the electronic device may generate, based on the downlink packet, the master interrupt signal corresponding to the downlink packet, and transmit the generated master interrupt signal to the second processor through the master interrupt interface. In at least one alternative implementations, the master interrupt signal may be a preset first value; the first processor of the electronic device may set, based on the detected downlink packet, the master interrupt interface to the first value.

At block 204, the first processor receives a slave acknowledge signal returned from the second processor based on the master interrupt signal.

The slave acknowledge signal is configured to indicate that the second processor is ready to receive the downlink data. A data transmission interface is required to implement the data transmission between the first processor and the second processor. When the data transmission interface is occupied by other service functions, the first processor cannot transmit the downlink packet to the second processor.

The master interrupt signal is configured to interrupt and instruct the second processor that there is a downlink data required to be transmitted to the second processor. Specifically, the second processor may lock the data transmission interface based on the master interrupt signal, and the locked data transmission interface may be configured to receive the downlink packet corresponding to the master interrupt signal. After locking the data transmission interface based on the master interrupt signal, the second processor may return the slave acknowledge signal to the first processor.

In some alternative implementations, the slave acknowledge interface may be controlled by a high/low level. In some embodiments of the disclosure, it is illustrated by taking the high level representing the slave acknowledge signal, and the low level representing the reset slave acknowledge signal as an example, after locking the data transmission interface based on the master interrupt signal, the second processor may set the slave acknowledge interface to a high-level state.

At block 206, the first processor transmits the downlink packet to the second processor based on the slave acknowledge signal, and resets the master interrupt signal after completion of the transmitting of the downlink packet to obtain a reset interrupt signal; where the reset slave acknowledge signal is configured to instruct the second processor to reset the slave acknowledge signal after completion of processing the downlink packet.

The reset master interrupt signal may indicate that the first processor has completed the data transmission. In some alternative implementations, the reset master interrupt signal may be a preset second value; upon completing the transmission of the downlink packet, the electronic device may set the master interrupt signal of the first processor to the second value. Specifically, the second value is different from the first value. For example, when the first value is 1, the second value may be 0; and when the first value is 0, the second value may be 1.

When the transmission of the downlink packet has been completed, the first processor may reset the master interrupt signal to notify the second processor that the downlink packet has been transmitted. In response to receiving the downlink packet, the second processor may process the downlink packet. When acquiring the reset master interrupt signal and completing the processing of the downlink packet, the second processor may reset the slave acknowledge signal to obtain the reset interrupt signal. Specifically, the second processor may set the slave acknowledge interface to a low-level state. Furthermore, the second processor may unlock the locked data transmission interface after resetting the slave acknowledge signal. The reset slave acknowledge signal is configured to notify the first processor that the second processor has completed the processing of the downlink packet, and the first processor may transmit, based on the reset slave acknowledge signal, the master interrupt signal to the second processor once again to transmit data.

Further, when output of the master interrupt interface is the reset master interrupt signal, the first processor re-detects whether there is a downlink packet to be transmitted, so as to perform a next data transmission. In at least one alternative embodiment, when the transmission of the downlink packet corresponding to the master interrupt signal has not been completed, in response to detecting a new downlink packet, the first processor may transmit, based on the detected new downlink packet, a master interrupt signal corresponding to the new downlink packet to the second processor after receiving the reset slave acknowledge signal.

In some embodiments, the electronic device may generate a data packet queue from the detected downlink packet, and transmit the data packet in queue based on the data packet queue. In at least one alternative embodiment, the electronic device may adjust, based on a transmission level corresponding to the downlink packet, a position of the downlink packet in the data packet queue. Specifically, the transmission level corresponding to the downlink packet may be determined based on one or more of an application level corresponding to the downlink packet, a generation time corresponding to the downlink packet, and a data volume corresponding to the downlink packet, etc.

In the existing technologies, the data transmission between processors may be performed only after a completion of a bidirectional acknowledge via the slave acknowledge signal, master interrupt signal, slave interrupt signal, and the master acknowledge signal. In addition, after a completion of the data transmission, it requires a bidirectional acknowledge via the reset slave acknowledge signal, the reset master interrupt signal, the reset slave interrupt signal and the reset master acknowledge signal to end this communication.

According to the processor communication method provided by the illustrated embodiments of the disclosure, upon detecting the downlink packet, the first processor may transmit a master interrupt signal to the second processor, and receive a slave acknowledge signal returned from the second processor based on the master interrupt signal. In response to receiving the slave acknowledge signal, the first processor may transmit the downlink packet to the second processor and reset the master interrupt signal after the completion of the transmitting of the downlink packet; where the reset master interrupt signal is configured to instruct the second processor to reset the slave acknowledge signal after the completion of processing of the downlink packet. In other words, the data packet may be transmitted in response to receiving the slave acknowledge signal, and the master interrupt signal is reset after completion of transmitting the data packet, where the reset master interrupt signal represents that a single data transmission process has been completed. There is no need to introduce a secondary confirmation via the slave interrupt signal and the master acknowledge signal. As such, time delay of the processor communication can be reduced and efficiency of the processor communication can be improved.

In the processor communication method provided by the illustrated embodiments, the operation of transmitting, by the first processor, a master interrupt signal to the second processor, in response to detecting a downlink packet includes operations as follows. In response to a data volume of the downlink packet exceeding a first threshold, data contained in the downlink packet is transmitted to the second processor in batches based on a preset data volume, and the master interrupt signal is reset after completion of transmitting of a last one of the batches of the data.

According to the processor communication method provided by the illustrated embodiments of the disclosure, a high-speed channel and a low-speed channel may be provided for the communication between the first processor and the second processor. The high-speed channel is configured to transmit large data, such as upgrade data of over the AirTechnology (OTA), raw sensor data; and the low-speed channel is configured to transmit small data, such as sampling data output by sensors based on the raw sensor data, and data output by an algorithm. The preset first threshold may be configured to measure of how large the data volume. The first threshold is less than or equal to the maximum amount of data that the data transmission interface is capable of transmitting in a single data transmission process. The specific first threshold may be set according to actual requirements, which is not limited herein. For example, the first threshold may be set as 1M, 3M, 5M.

Specifically, the preset data volume refers to a preset amount of data transmitted by the electronic device in each data transmission process. The preset data volume may be set according to actual requirements, which is not limited herein. For example, the preset data volume may be set as 256 bytes, 512 bytes, 1024 bytes. Specifically, when the data volume of the downlink packet exceeds the first threshold, the first processor may transmit, based on the preset data volume, the data contained in the downlink packet to the second processor in batches, and resets the master interrupt signal after completion of transmitting of the last batch of the data. In other words, the first processor may not reset the master interrupt signal after completion of transmission of each batch of the data until the last batch of the data has been transmitted, and then the master interrupt signal is reset. Therefore, each batch of the data is transmitted without retransmitting the master interrupt signal to the second processor. In this way, it avoids the problem of low data transmission efficiency results from that the master interrupt signal is required to be transmitted for each decomposed data packet to perform a communication process when the large data is decomposed and transmitted. As such, the efficiency of processor communication and data transmission can be improved.

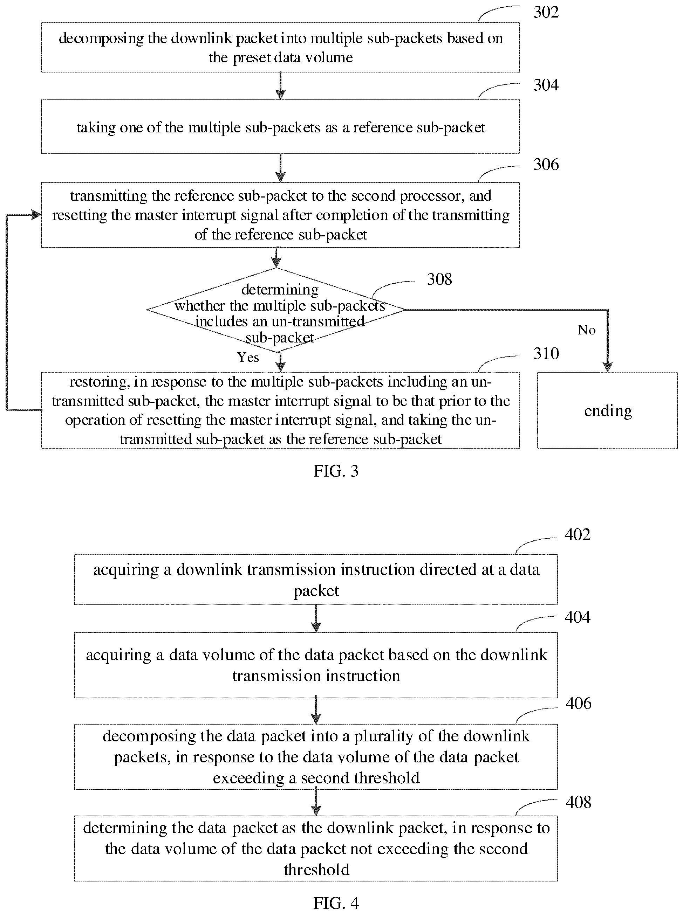

FIG. 3 is a flowchart of transmitting downlink packet based on a preset data volume according to some embodiments. As illustrated in FIG. 3, a processor communication method according to some embodiments includes the blocks as follows.

At block 302, the downlink packet is decomposed into multiple sub-packets based on a preset data volume.

The first processor decomposes the downlink packet into the multiple sub-packets as per each of the batches is with the preset data volume. It is illustrated by taking the preset data volume being 512 bytes as an example; when the data volume of the downlink packet is 10KB, the first processor may decompose the downlink packet into 20 sub-packets; and when the data volume of the downlink packet is 1MB, the first processor may decompose the downlink packet into 2048 sub-packets.

At block 304, one of the multiple sub-packets is taken as a reference sub-packet.

The first processor may take the one of the multiple sub-packets as the reference sub-packet. In some alternative embodiments, the first processor may take the first sub-packet of the multiple decomposed sub-packets as the reference sub-packet.

At block 306, the reference sub-packet is transmitted to the second processor, and the master interrupt signal is reset after completion of transmitting of the reference sub-packet.

The first processor transmits the reference sub-packet to the second processor, and resets the master interrupt signal after the completion of the transmitting of the reference sub-packet. The reset master interrupt signal represents that the reference sub-packet has been transmitted.

At block 308, it is determined whether there is an un-transmitted sub-packet in the multiple sub-packets, when there is the un-transmitted sub-packet, the block 310 is performed, and when there is no un-transmitted sub-packet, the process ends.

At block 310, the master interrupt signal is restored to be that prior to the operation of resetting, the un-transmitted sub-packet is taken as the reference sub-packet, and the process returns to the block 306.

When there is an un-transmitted sub-packet remained in the multiple sub-packets, the first processor may restore the master interrupt signal which is reset after transmitting the reference sub-packet to be the master interrupt signal before the resetting, and take the un-transmitted sub-packet as a current reference sub-packet. And then, the current reference sub-packet is transmitted to the second processor, and the master interrupt signal is reset after completion of the transmitting of the current reference sub-packet. When there is no un-transmitted sub-packet remained in the multiple sub-packets, the first processor may maintain the reset master interrupt signal, and wait for receiving the reset slave acknowledge signal returned from the second processor based on the reset master interrupt signal.

It is illustrated by taking the master interrupt signal being a first value and the reset master interrupt signal being a second value as an example. The first processor may reset the master interrupt interface from the second value to the second value after completion of transmitting the reference sub-packet, and then restore, in response to determining the multiple sub-packets includes the un-transmitted sub-packet, the master interrupt interface to be the first value before the resetting. The second processor may continue to receive the data packet transmitted from the first processor, based on the received master interrupt signal with the first value. In this case, the first processor may take the un-transmitted sub-packet as the current reference sub-packet, continue to transmit the current reference sub-packet to the second processor, and reset the master interrupt interface from the first value to the second value after the transmitting until there is no un-transmitted sub-packet remained in the multiple sub-packets.

The downlink packet may be decomposed into the multiple sub-packets based on the preset data volume, the first processor then transmits the sub-packet to the second processor, restores the master interrupt signal reset after completion of transmitting the sub-packet, and transmits the remaining sub-packet(s) to the second processor until there is no un-transmitted sub-packet remained in the multiple sub-packets, and then the restoring operation does not performed any more on the reset master interrupt signal. As such, the efficiency of data transmission can be improved.

FIG. 4 is a flowchart of acquiring a downlink packet according to some embodiments. As illustrated in FIG.4, according to some embodiments, before the operation of transmitting, by the first processor, a master interrupt signal to the second processor, in response to detecting a downlink packet, the processor communication method may further include the blocks as follows.

At block 402, a downlink transmission instruction directed at a data packet is acquired.

The electronic device acquires a downlink transmission instruction directed at the data packet. The downlink transmission instruction may be generated by the electronic device based on a preset service process. Alternatively, the downlink transmission instruction acquired by the electronic device may be input by a user. For example, in response to acquiring a preset data packet, the electronic device may generate the downlink transmission instruction corresponding to the data packet. Alternatively, the electronic device may generate the downlink transmission instruction corresponding to the data packet in response to a type of the data packet being a preset type. Alternatively, the electronic device may generate, based on the touch operation, the downlink transmission instruction corresponding to the downlink packet, in response to acquiring a user's touch operation performed on a downlink transmission control corresponding to the data packet.

At block 404, a data volume of the data packet is acquired based on the downlink transmission instruction.

The downlink transmission instruction is configured to instruct the first processor to transmit the data packet from the first processor to the second processor. The electronic device may acquire the data volume of the data packet based on the downlink transmission instruction.

At block 406, the data packet is decomposed into multiple downlink packets, in response to the data volume of the data packet exceeding a second threshold.

The second threshold is less than or equal to the maximum amount of data that the data transmission interface is capable of transmitting in a single data transmitting process. The specific second threshold may be set according to actual requirements, which is not limited herein.

At block 408, the data packet is determined as the downlink packet, in response to the data volume of the data packet not exceeding the second threshold.

The first processor may decompose the data packet into multiple downlink packets, in response to the data volume of the data packet exceeding the second threshold. In some alternative embodiments, the first processor may further add the multiple decomposed downlink packets into the downlink transmission queue, and transmit, based on an order of the downlink transmission queue, each of the multiple decomposed downlink packets to the second processor. Specifically, a data volume of each of the decomposed downlink packets is less than the second threshold. In response to the data volume of the data packet not exceeding the second threshold, the first processor may take the data packet as the downlink packet, and transmit, based on the downlink packet, the master interrupt signal to the second processor, so as to transmit the downlink packet to the second processor.

When the data volume of the data packet exceeds the second threshold, the data packet is decomposed into the multiple downlink packets; and when the data volume of the data packet not exceeds the second threshold, the data packet is determined as the downlink packet, and then, the operation of transmitting the master interrupt signal to the second processor in response to detecting the downlink packet is performed. In this way, the data packet with large data volume may be transmitted in batches, thereby avoiding transmitting an excessive amount of data in one data transmission.

In the processor communication method provided by some embodiments, the downlink packet may include a payment identification code generated by the first processor. Specifically, before transmitting the master interrupt signal to the second processor by the first processor in response to receiving the downlink packet, the method further includes the operations as follows. When the electronic device is in a network connection state, the electronic device generates a payment identification code and the data transmission instruction corresponding to the payment identification code; and the electronic device generates, based on the data transmission instruction, the downlink packet corresponding to the payment identification code.

In the illustrated embodiments, the security of the second processor is higher than the security of the first processor. The second processor is configured to store data with high security requirements. The first processor has a capability to connect to a network, and therefore the first processor connected to the network may generate the payment identification code and the data transmission instruction corresponding to the payment identification code. Specifically, one or more than one payment identification code may be generated, and the specific quantity of the payment identification code is related to the usable time and the storage space. For example, the quantity may be set as 10, 15, or 20. The second processor The second processor does not have a capability to connect to a network, and therefore the security of the second processor is higher than that of the first processor. Specifically, the payment identification code may be a bar code, a quick response (QR) code, and the like.

The data transmission instruction is configured to instruct the electronic device to save the payment identification code in the second processor. The electronic device may generate, based on the data transmission instruction, the downlink packet corresponding to the payment identification code. Then, the first processor may transmit, in response to detecting the downlink packet, the master interrupt signal to the second processor, transmit the downlink packet to the second processor upon the returned slave acknowledge signal, and reset the master interrupt signal after the transmitting of the downlink packet to obtain the reset mas. The second processor may parse the received downlink packet to acquire the payment identification code in the received downlink packet, and save the payment identification code in the memory corresponding to the second processor. Then, the second processor may reset, based on the reset master interrupt signal, the slave acknowledge signal to obtain the slave acknowledge, so as to enable the first processor to initiate, based on the reset slave acknowledge signal, the master interrupt signal once again.

In addition, in response to receiving a payment request by the electronic device in an offline state, the electronic device may read the payment identification code from the memory corresponding to the second processor, and display the payment identification code, so as to complete a payment operation corresponding to the payment request.

When implementing an application for an online payment, the electronic device is generally required to connect to the network, so as to generate the payment identification code and then display the payment identification code. In an offline scenario, the electronic device cannot generate the payment identification code for a payment operation. According to the above embodiments provided by the disclosure, the payment identification code generated by the first processor is transmitted to the second processor for saving, which enables the wearable device in the offline scenario with the payment function, and ensures the security of payment information.

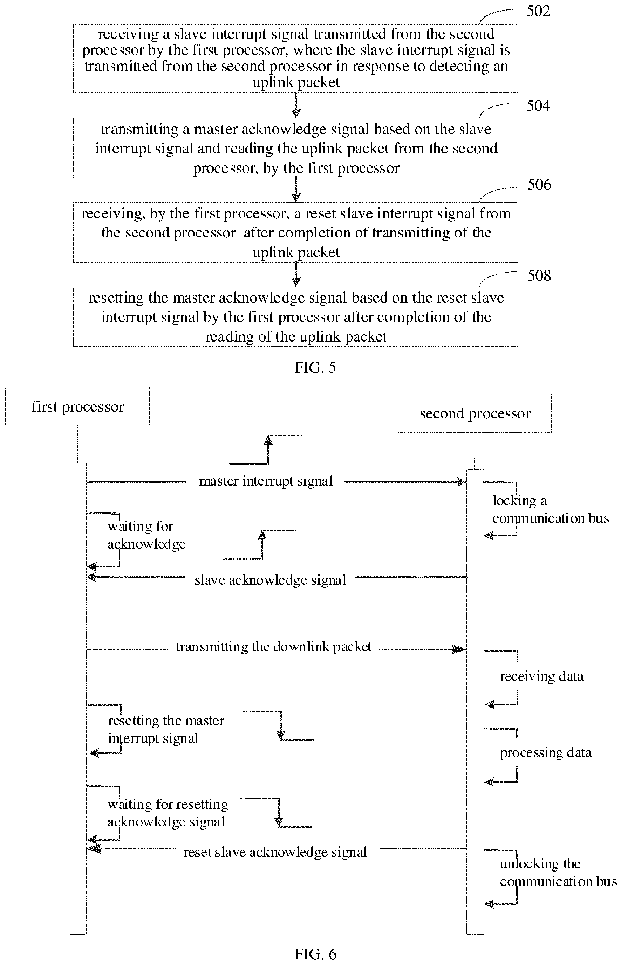

FIG. 5 is another flowchart illustrating a processor communication method according to some embodiments. As illustrated in FIG. 5, the processor communication apparatus according to some embodiments include blocks as follows.

At block 502, the first processor receives a slave interrupt signal transmitted from the second processor, where the slave interrupt signal is transmitted from the second processor in response to detecting an uplink packet.

The uplink packet refers to a data packet required to be transmitted to the first processor by the second processor. The uplink packet may include at least one of an operation instruction and service data which are received or generated by the second processor. For example, the uplink packet may be data acquired by a sensor connected to the second processor.

The slave interrupt signal is configured to interrupt and instruct the first processor that there is the uplink packet to be transmitted to the first processor. Specifically, upon detecting the uplink packet, the second processor of the electronic device may generate the slave interrupt signal corresponding to the uplink packet, and transmit the generated slave interrupt signal to the second processor through the master interrupt interface.

At block 504, the first processor transmits a master acknowledge signal based on the slave interrupt signal, and reads the uplink packet from the second processor.

The first processor may read, based on the slave interrupt signal, the uplink packet from the second processor, and transmits the master acknowledge signal to the second processor. The master acknowledge signal is configured to indicate that the first processor is in a data transmission state.

At block 506, the first processor receives a reset slave interrupt signal from the second processor after transmitting of the uplink packet is completed.

The second processor may reset the slave interrupt signal when the uplink packet has been transmitted. The first processor may receive the reset slave interrupt signal. The reset slave interrupt signal may represent that the second processor has completed the data transmission.

At block 508, the first processor resets the master acknowledge signal based on the reset slave interrupt signal after completion of the reading of the uplink packet.

The second processor may reset the slave interrupt signal after the uplink packet has been transmitted, so as to notify the first processor that the transmission of the uplink packet has been completed. In response to acquiring the reset slave interrupt signal, the first processor may reset the master acknowledge signal to obtain a reset master acknowledge signal. In some alternative implementations, the master acknowledge interface may be controlled by a high/low level. In the illustrated embodiments of the disclosure, the high level representing the slave acknowledge signal, and the low level representing the reset master acknowledge signal are taken as an example, when receiving the reset slave interrupt signal and completing the reading of the uplink package, the first processor sets the master acknowledge interface from a high-level state to a low-level state.

In the above illustrated embodiments, the first processor may read the data packet in response to receiving the slave interrupt signal, and then reset the master acknowledge signal based on the reset slave interrupt signal from the second processor after completion of the reading of the data packet, where the reset master interrupt signal represents that a single data transmission process has been completed. In this way, time delay of the processor communication can be reduced, and efficiency of the processor communication can be improved.

In some embodiments, the processor communication method further includes operations as follows. A data transmission request initiated by an application is acquired; a data interface corresponding to a data type contained in the data transmission request is called; in response to the data interface belonging to the first processor, the downlink packet is generated based on data received by the data interface; or in response to the data interface belonging to the second processor, the uplink packet is generated based on data received by the data interface.

The data transmission request refers to a transmission request for transmitting data between the first processor and the second processor via the communication therebetween. The data transmission request includes the data type of the to-be-transmitted data, and the electronic device may call the data interface corresponding to the data type. Specifically, the data types may be determined based on a device, an application and a service that generate the data. For example, the data types may include global positioning data, acceleration data, angular velocity data, data output by an image recognition algorithm, and the data types are not limited to these. Different data interfaces belong to different processors, and a manufacturer of the electronic device may set the specific processor to which the interface belongs based on actual requirements, which is not limited herein.

The electronic device may call, based on the data type in the data transmission request, the data interface corresponding to the data type, so as to acquire the data generated by the data interface. In response to the data interface belonging to the first processor, the electronic device generates the downlink packet based on data received by the data interface, and performs the operation of transmitting, by the first processor, a master interrupt signal to the second processor, in response to detecting a downlink packet; or in response to the data interface belonging to the second processor, the electronic device generates the uplink packet based on data received by the data interface, and performs the operation of receiving a slave interrupt signal transmitted from the second processor by the first processor, where the slave interrupt signal is transmitted by the second processor in response to detecting an uplink packet.

Furthermore, the second processor may transmit the received downlink packet to the application that initiates the data transmission request; the first processor may transmit the received uplink packet to the application that initiates the data transmission request.

FIG. 6 is a schematic sequence diagram illustrating a processor communication method according to some embodiments. As illustrated in FIG. 6, according some embodiments, the process of the processor communication method is as follows.

First, in response to detecting a downlink packet, a first processor notifies a second processor via a master interrupt signal.

Then, the first processor locks a communication bus based on the master interrupt signal, and transmits a slave acknowledge signal to the first processor after locking the communication bus.

Then, the first processor transmits, based on the received slave acknowledge signal, the downlink packet to the second processor by using a write operation, and then resets the master interrupt signal to obtain a reset master interrupt to notify the second processor after the transmitting.

Then, the second processor may receive and process the downlink packet transmitted from the first processor, and reset the slave acknowledge signal to obtain a reset acknowledge signal, so as to unlock the communication bus after completion of the processing the downlink packet.

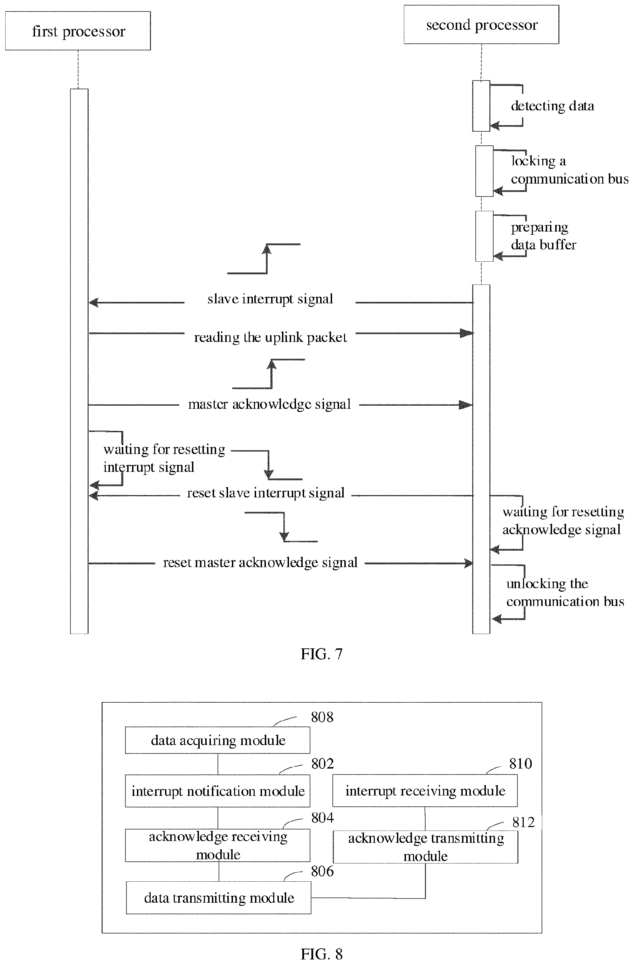

FIG. 7 is another schematic sequence diagram illustrating a processor communication method according to some embodiments. As illustrated in FIG. 7, according to some embodiments, the process of the processor communication method is as follows.

First, in response to detecting an uplink packet, a second processor locks a communication bus based on the uplink packet. The second processor buffers the uplink packet in a transmission queue, and then transmits a slave interrupt signal to the first processor.

Then, in response to receiving the slave interrupt signal, the first processor reads the uplink packet in a read operation sequence from the second processor, and transmits a master acknowledge signal.

Then, the second processor resets the slave interrupt signal to obtain a reset slave interrupt signal after completion of transmitting the uplink packet, and waits for a response from the first processor.

Then, the first processor resets, based on the reset slave interrupt signal, the master acknowledge signal to obtain a reset master acknowledge signal.

Then, the second processor unlocks the communication bus based on the reset master acknowledge signal.

It should be understood that, although the operations of the flow chart in FIGS. 2-7 are indicated sequentially by arrows, but the operations are not necessarily executed in the order indicated by the arrows. Unless it is specifically stated in the disclosure, the operations are not restricted strictly by the order, and the operations may be executed in other orders. Moreover, at least a part of the operations in FIGS. 2-7 may include several sub-operations or several stages, the sub-operations or stages are not necessarily executed at the same time, but may be executed at a different time. The execution order of these sub-operations or stages is not necessarily performed sequentially, and may be executed alternately or alternately with at least a part of other operations or sub-operations or stages of other operations.

FIG. 8 is a schematic block diagram illustrating a processor communication apparatus according to some embodiments. As illustrated in FIG. 8, the processor communication apparatus according to the embodiments include an interrupt notification module 802, an acknowledge receiving module 804 and a data transmitting module 806.

The interrupt notification module 802 is configured to transmit a master interrupt signal to a second processor by a first processor in response to detecting a downlink packet.

The acknowledge receiving module 804 is configured to receive, by the first processor, a slave acknowledge signal returned by the second processor based on the master interrupt signal.

The data transmitting module 806 is configured to transmit the downlink packet to the second processor based on the slave acknowledge signal and reset the master interrupt signal after completion of the transmitting of the downlink packet to obtain a reset master interrupt signal, by the first processor; where the reset master interrupt signal is configured to instruct the second processor to reset the slave acknowledge signal after completion of processing the downlink packet.

According to the processor communication apparatus provided by the embodiments of the disclosure, the first processor may transmit the data packet in response to receiving the slave acknowledge signal, and reset the master interrupt signal to obtain the reset master interrupt signal after completion of the transmitting of the data packet, where the reset master interrupt signal represents that a single data transmission process is completed. As such, time delay of the processor communication can be reduced.

In some embodiments, the data transmitting module 806 may be further configured to transmit, in response to a data volume of the downlink packet exceeding a first threshold, data contained in the downlink packet to the second processor in batches based on a preset data volume, and reset the master interrupt signal after completion of transmitting of a last one of the batches of data.

In some embodiments, the data transmitting module 806 may be further configured to: decompose the downlink packet into multiple sub-packets based on the preset data volume; take one of the multiple sub-packets as a reference sub-packet; transmit the reference sub-packet to the second processor, and reset the master interrupt signal after completion of the transmitting of the reference sub-packet; and restore, in response to the multiple sub-packets including an un-transmitted sub-packet, the master interrupt signal to be that prior to the operation of resetting the master interrupt signal, take the un-transmitted sub-packet as the reference sub-packet, and return to the operation of transmitting the reference sub-packet to the second processor.

In some embodiments, the processor communication apparatus may further include a data acquiring module 808. The data acquiring module 808 is configured to: acquire a downlink transmission instruction directed at a data packet; acquire a data volume of the data packet based on the downlink transmission instruction; and decompose the data packet into multiple downlink packets, in response to the data volume of the data packet exceeding a second threshold; or, determine the data packet as the downlink packet, in response to the data volume of the data packet not exceeding the second threshold.

In some embodiments, the data acquiring module 808 may be further configured to: generate a payment identification code and a data transmission instruction corresponding to the payment identification code, when the electronic device is in a network connection state; and generate the downlink packet corresponding to the payment identification code, based on the data transmission instruction.

In some embodiments, the processor communication apparatus may further include an interrupt receiving module 810 and an acknowledge transmitting module 812. The interrupt receiving module 810 may be configured to receive a slave interrupt signal transmitted from the second processor by the first processor, where the slave interrupt signal is transmitted by the second processor in response to detecting an uplink packet. The acknowledge transmitting module 812 may be configured to transmit a master acknowledge signal by the first processor based on the slave interrupt signal. The data transmitting module 806 may be further configured to read the uplink packet from the second processor. The interrupt receiving module 810 may be further configured to receive, by the first processor, a reset slave interrupt signal from the second processor after completion of transmitting of the uplink packet. The acknowledge transmitting module 812 may be further configured to reset the master acknowledge signal based on the reset slave interrupt signal by the first processor after completion of the reading of the uplink packet.

In some embodiments, the data acquiring module 808 may be configured to: acquire a data transmission request initiated by an application; call a data interface corresponding to a data type contained in the data transmission request; and generate, in response to the data interface belonging to the first processor, the downlink packet based on data received by the data interface; or, generate, in response to the data interface belonging to the second processor, the uplink packet based on data received by the data interface.

The distinction between the various modules in the above processor communication apparatus is for illustration only. In other embodiments, the processor communication apparatus may be divided into different modules as required to complete all or part of functions of the above processor communication apparatus.

For the specific limitation of the apparatus of processing text in an image, reference may be made to the foregoing description on the processor communication apparatus, and details are not described herein again. Each module in the above processor communication apparatus may be implemented in whole or in part by software, hardware, and a combination thereof. The above-mentioned modules may be embedded in the hardware form or independent of the processor(s) in the computer device, or may be stored in the memory of the computer device in the form of software, so that the processor(s) calls and performs the operations corresponding to the above modules.

An electronic device is provided by some embodiments. The electronic device includes a first processor, a second processor and a memory coupled to a system bus. The first processor and the second processor are configured to provide computing and control capabilities to support the operation of the entire electronic device. The memory may include a non-transitory storage medium and an internal memory. The non-transitory storage medium stores an operating system and a computer program. The computer program may be executed by the first processor and the second processor for implementing the processor communication method according to the various embodiments. The internal memory provides a cached operating environment for the operating system and the computer program in non-volatile storage medium. The electronic device may be a mobile phone, a tablet computer, a personal digital assistant or a wearable device, etc.

According to the embodiments of the disclosure, the various modules in the processor communication apparatus may be implemented in the form of computer program. The computer program may be capable of running on a terminal or a server. A program module constituted by the computer program may be stored in the memory of the terminal or the server. The computer program, when is executed by the processors, implement the operations of the method described in the embodiment of the disclosure.

Embodiments of the disclosure further provide an electronic device. For ease of description, only parts related to this embodiment of the present disclosure are shown. For specific technical details that are not disclosed, reference is made to the method part of the embodiments of the present disclosure. The electronic device may be any terminal device including a mobile phone, a tablet computer, a personal digital assistant (PDA), a point of sales (POS), a vehicle-mounted computer, a wearable device, etc. A wearable device is taken as an example of the electronic device as follows.

The wearable device includes a first processor and a second processor. Both the first processor and the second processor are microprocessors. The first processor may be a central process unit (CPU) processor, and a first system corresponding to the first processor 110 may be an android system; the second processor may be a microcontroller unit (MCU) processor, and a second system corresponding to the second processor 120 may be a real time operating system (RTOS).

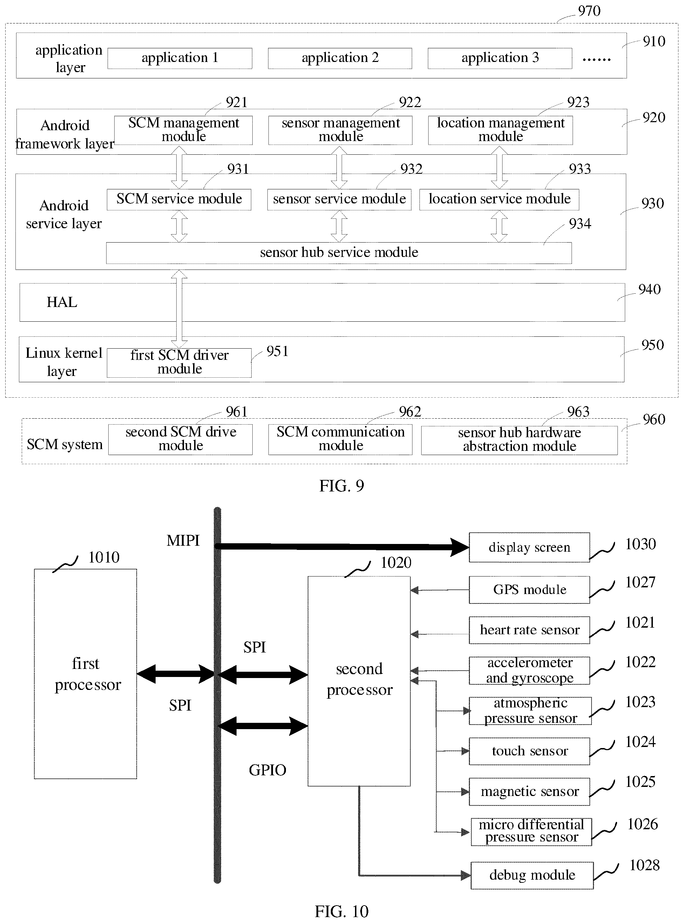

FIG. 9 is a schematic diagram illustrating a software framework of a wearable device according to some embodiment; and as illustrated in FIG. 9, the wearable device may include an Android system 970 and a single chip microcomputer (SCM) system 960. The Android system 970 runs on the first processor; and the SCM system 960 runs on a second processor. The Android system 970 includes an application layer 910, an Android framework layer 920, an Android service layer 930, a hardware abstraction layer (HAL) 940, a Linux kernel layer 950; and the SCM system 960.

The application layer 910 is configured to provide various applications.

The Android framework layer 920 includes a SCM management module 921, a sensor management module 922, and a location management module 923; and the Android framework layer 920 is configured to manage the applications provided by the application layer 910.

The Android server layer 930 includes a SCM service module 931, a sensor service module 932, a location service module 933, and a sensor hub service module 934; and the Android server layer 930 is configured to provide services for the management modules included in the Android framework layer 920.

The Linux kernel layer 950 includes a first SCM driver module 951, and the Linux kernel layer 950 provides core system services for the Android system 970.

The SCM system 960 includes a second SCM drive module 961, a SCM communication module 962, and a sensor hub hardware abstraction module 963. Specifically, the sensor hub hardware abstraction module 963 may be configured to process the data provided by the sensor.

The first SCM module 951 and the second SCM drive module 961 are in communication connection via a serial peripheral interface (SPI).

In some embodiments, the wearable device may provide at least two operation modes: a watch mode and a bracelet mode. When the wearable device is in the watch mode, both the Android system 970 and the single-chip system 960 run, and the wearable device is controlled by the Android system 970; and when the wearable device is in the bracelet mode, the Android system 970 is off, and the SCM system 960 runs to control the wearable device.

When the wearable device is in the watch mode, the SCM service module 931 manage the data upload and data download for the Android system 970. When an application in the application layer 910 requires to transmit downlink packet to the SCM system 960, or to read the uplink packet from the SCM system 960, the SCM management module 921 is required to call a relevant data interface, establish a bidirectional communication channel to obtain the corresponding data packet for distribution, and communicate with the SCM service module 931 in the distribution processor. The SCM service module 931 may perform the above processor communication method based on the acquired data packet.

FIG. 10 is a schematic diagram illustrating a hardware framework of the wearable device provided in FIG. 9. As illustrated in FIG. 10, the wearable device includes a first processor 1010 and a second processor 1020. The first processor 1010 and the second processor 1020 are both microprocessors. The first processor 1010 may be a central process unit (CPU) processor, and a first system corresponding to the first processor 110 may be an android system; the second processor 1020 may be a microcontroller unit (MCU) processor, and a second system corresponding to the second processor 120 may be a real time operating system (RTOS).

Specifically, the wearable device may include one or more of a heart rate sensor 1021, an acceleration and a gyroscope 1022, an atmospheric pressure sensor 1023, a touch sensor 1024, a magnetic sensor 1025, a micro differential pressure sensor 1026 and other sensors; the second processor 1020 may be connected to the sensor included in the wearable device to obtain data collected by the sensor; the second processor 1020 may further be connected to a global positioning system(GPS) module 1027 to obtain positioning data received by a GPS antenna; and the second processor 1020 is connected to a debug module 1028 to output debug data of the wearable device.

The display screen 130 is connected to the first processor 1010 and the second processor 1020 through a mobile industry processor interface (MIPI), and the display screen 130 may display the data output by the first processor 1010 or the second processor 1020. The first processor 1010 and the second processor 1020 are connected through SPI. The wearable device may transmit various sensor data acquired by the second processor 1020 to the first processor 1010 by performing the above-mentioned processor communication method; the wearable device may also transmit the data provided by the first processor 1010 to the second processor 1020 through the above-mentioned processor communication method.

Embodiments of the disclosure further provide a computer readable storage medium. One or more non-volatile computer readable storage mediums include computer executable instructions, and the computer executable instructions are configured to, when executed by one or more processors, cause the processor to implement the processor communication method.

A computer program product includes instructions. When the instructions are implemented on a computer, the computer is caused to perform the above processor communication method.

Any reference to a memory, storage, database, or other medium used herein can include a non-transitory and/or a transitory memory. The non-transitory memory may include a read-only memory (ROM), a programmable ROM (PROM), an electrically programmable ROM (EPROM), an electrically erasable programmable ROM (EEPROM), or a flash memory. The transitory memory may include a random-access memory (RAM), which acts as an external cache. For illustration rather than limitation, the RAM is available in a variety of forms, such as a static RAM (SRAM), a dynamic RAM (DRAM), a synchronous DRAM (SDRAM), a double data rate SDRAM (DDR SDRAM), an enhanced SDRAM (ESDRAM), a synchronization link DRAM (SLDRAM), a Rambus direct RAM (RDRAM), a direct Rambus dynamic RAM (DRDRAM), and a Rambus dynamic RAM (RDRAM).

The above embodiments only express several implementations of the disclosure, and the description thereof is relatively specific and detailed, but it cannot be interpreted as the limitation to the scope of the disclosure. It should be pointed out that for those skilled in the art, various variation and improvement can be made under the premise of not deviating from the concept of the disclosure, which all belong to the protection scope of the application. Therefore, the protection scope of the disclosure shall be subject to the attached claims.

## Claims

1. A processor communication method, implemented by an electronic device comprising a first processor and a second processor, and the method comprising;
transmitting a master interrupt signal to the second processor by the first processor in response to detecting a downlink packet;
receiving, by the first processor, a slave acknowledge signal returned by the second processor based on the master interrupt signal; and
transmitting the downlink packet to the second processor based on the slave acknowledge signal and resetting the master interrupt signal after completion of the transmitting of the downlink packet to obtain a reset master interrupt signal, by the first processor; wherein the reset master interrupt signal is configured to instruct the second processor to reset the slave acknowledge signal after completion of processing the downlink packet.

2. The method as claimed in claim 1, wherein the transmitting the downlink packet to the second processor based on the slave acknowledge signal and resetting the master interrupt signal after completion of the transmitting of the downlink packet to obtain a reset master interrupt signal, by the first processor, comprises:
transmitting, in response to a data volume of the downlink packet exceeding a first threshold, data contained in the downlink packet to the second processor in batches based on a preset data volume, and resetting the master interrupt signal after completion of transmitting of a last one of the batches of data.

3. The method as claimed in claim 2, wherein the transmitting data contained in the downlink packet to the second processor in batches based on a preset data volume, and resetting the master interrupt signal after completion of transmitting of a last one the batches of data, comprises:
decomposing the downlink packet into a plurality of sub-packets based on the preset data volume;
taking one of the plurality of sub-packets as a reference sub-packet;
transmitting the reference sub-packet to the second processor, and resetting the master interrupt signal after completion of the transmitting of the reference sub-packet; and
restoring, in response to the plurality of sub-packets comprising an un-transmitted sub-packet, the master interrupt signal to be that prior to the operation of resetting the master interrupt signal, taking the un-transmitted sub-packet as the reference sub-packet, and returning to the operation of transmitting the reference sub-packet to the second processor.

4. The method as claimed in claim 1, before the transmitting a master interrupt signal to the second processor by the first processor in response to detecting a downlink packet, further comprising:
acquiring a downlink transmission instruction directed at a data packet;
acquiring a data volume of the data packet based on the downlink transmission instruction; and
decomposing the data packet into a plurality of the downlink packets, in response to the data volume of the data packet exceeding a second threshold; or, determining the data packet as the downlink packet, in response to the data volume of the data packet not exceeding the second threshold.

5. The method of claim 4, after the decomposing the data packet into a plurality of the downlink packets, further comprising:
adding the plurality of decomposed downlink packets into a downlink transmission queue, and transmitting, based on an order of the downlink transmission queue, each of the plurality of decomposed downlink packets to the second processor.

6. The method as claimed in claim 1, wherein a security of the first processor is higher than a security of the second processor, and the method, before transmitting a master interrupt signal to the second processor by the first processor in response to detecting a downlink packet, further comprises:
generating a payment identification code and a data transmission instruction corresponding to the payment identification code, when the electronic device is in a network connection state; and
generating the downlink packet corresponding to the payment identification code, based on the data transmission instruction.

7. The method of claim 6, after the generating a payment identification code and a data transmission instruction corresponding to the payment identification code, further comprising:
saving the payment identification code in a memory corresponding to the second processor; and
reading, in response to receiving a payment request by the electronic device in an offline state, the payment identification code from the memory corresponding to the second processor, and displaying the payment identification code for completing a payment operation corresponding to the payment request.

8. The method as claimed in claim 1, further comprising:
receiving a slave interrupt signal transmitted from the second processor by the first processor, wherein the slave interrupt signal is transmitted from the second processor in response to detecting an uplink packet;
transmitting a master acknowledge signal based on the slave interrupt signal and reading the uplink packet from the second processor, by the first processor;
receiving, by the first processor, a reset slave interrupt signal from the second processor after completion of transmitting of the uplink packet; and
resetting, by the first processor, the master acknowledge signal based on the reset slave interrupt signal after completion of the reading of the uplink packet.

9. The method as claimed in claim 8, further comprising:
acquiring a data transmission request initiated by an application;
calling a data interface corresponding to a data type contained in the data transmission request; and
generating, in response to the data interface belonging to the first processor, the downlink packet based on data received by the data interface; or, generating, in response to the data interface belonging to the second processor, the uplink packet based on data received by the data interface.

10. The method as claimed in claim 8, wherein the first processor and the second processor are connected through a master interrupt interface, a slave acknowledge interface, a slave interrupt interface, a master acknowledge interface, and a data transmission interface;
the master interrupt interface is configured to transmit the master interrupt signal;
the slave acknowledge interface is configured to transmit the slave acknowledge signal;
the slave interrupt interface is configured to transmit the slave interrupt signal;
the master acknowledge interface is configured to transmit the master interrupt signal; and
the data transmission interface is configured to transmit at least one of the downlink packet and the uplink packet.

11. The method as claimed in claim 1, after the transmitting a master interrupt signal to the second processor by the first processor, further comprising:
locking a data transmission interface based on the master interrupt signal and returning the slave acknowledge signal to the first processor, by the second processor; wherein the locked data transmission interface is configured to receive the downlink packet corresponding to the master interrupt signal.

12. The method as claimed in claim 11, wherein the first processor and the second processor are further connected through a slave acknowledge interface, and the method, after the locking a data transmission interface based on the master interrupt signal by the second processor, further comprises:
setting the slave acknowledge interface to a high-level state by the second processor; wherein the high-level state represents the slave acknowledge signal.

13. The method as claimed in claim 1, wherein the first processor and the second processor are further connected through a slave acknowledge interface, and the method, after resetting the slave acknowledge signal by the second processor, further comprises:
setting the slave acknowledge interface to a low-level state by the second processor; wherein the low-level state represents the reset slave acknowledge signal.

14. The method as claimed in claim 13, after the setting the slave acknowledge interface to a low-level state by the second processor, further comprising:
unlocking a locked data transmission interface.

15. A processor communication apparatus, applied to an electronic device comprising a first processor and a second processor, and the apparatus comprising;
an interrupt notification module, configured to transmit a master interrupt signal to the second processor by the first processor in response to detecting a downlink packet;
an acknowledge receiving module, configured to receive, by the first processor, a slave acknowledge signal returned by the second processor based on the master interrupt signal; and
a data transmitting module, configured to transmit the downlink packet to the second processor based on the slave acknowledge signal and reset the master interrupt signal after completion of the transmitting of the downlink packet to obtain a reset master interrupt signal, by the first processor; wherein the reset master interrupt signal is configured to instruct the second processor to reset the slave acknowledge signal after completion of processing the downlink packet.

16. The apparatus as claimed in claim 15, wherein the data transmitting module is further configured to: transmit, in response to a data volume of the downlink packet exceeding a first threshold, data contained in the downlink packet to the second processor in batches based on a preset data volume, and reset the master interrupt signal after completion of transmitting of a last one of the batches of data.

17. The apparatus as claimed in claim 16, wherein the data transmitting module is further configured to:
decompose the downlink packet into a plurality of sub-packets based on the preset data volume;
take one of the plurality of sub-packets as a reference sub-packet;
transmit the reference sub-packet to the second processor, and reset the master interrupt signal after completion of the transmitting of the reference sub-packet; and
restore, in response to the plurality of sub-packets comprising an un-transmitted sub-packet, the master interrupt signal to be that prior to the operation of resetting the master interrupt signal, take the un-transmitted sub-packet as the reference sub-packet, and return to the operation of transmitting the reference sub-packet to the second processor.

18. The apparatus as claimed in claim 15, further comprising a data acquiring module, wherein the data acquiring module is configured to:
acquire a downlink transmission instruction directed at a data packet;
acquire a data volume of the data packet based on the downlink transmission instruction; and
decompose the data packet into a plurality of the downlink packets, in response to the data volume of the data packet exceeding a second threshold; or, determine the data packet as the downlink packet, in response to the data volume of the data packet not exceeding the second threshold.

19. The apparatus as claimed in claim 18, wherein the data transmitting module is further configured to:
add the plurality of decomposed downlink packets into a downlink transmission queue, and transmit, based on an order of the downlink transmission queue, each of the plurality of decomposed downlink packets to the second processor.

20. The apparatus as claimed in claim 15, wherein the data acquiring module is further configured to:
generate a payment identification code and a data transmission instruction corresponding to the payment identification code, when the electronic device is in a network connection state; and
generate the downlink packet corresponding to the payment identification code, based on the data transmission instruction.

21. The apparatus as claimed in claim 20, wherein the data acquiring module is further configured to:
save the payment identification code in a memory corresponding to the second processor; and
read, in response to receiving a payment request by the electronic device in an offline state, the payment identification code from the memory corresponding to the second processor, and display the payment identification code for completing a payment operation corresponding to the payment request.

22. The apparatus as claimed in claim 15, wherein the apparatus further comprises an interrupt receiving module and an acknowledge transmitting module;
the interrupt receiving module is configured to receive a slave interrupt signal transmitted from the second processor by the first processor, wherein the slave interrupt signal is transmitted from the second processor in response to detecting an uplink packet;
the acknowledge transmitting module is configured to transmit a master acknowledge signal by the first processor based on the slave interrupt signal;
the data transmitting module is further configured to read the uplink packet from the second processor;
the interrupt receiving module is configured to receive, by the first processor, a reset slave interrupt signal from the second processor after completion of transmitting of the uplink packet; and
the acknowledge transmitting module is further configured to reset, by the first processor, the master acknowledge signal based on the reset slave interrupt signal after completion of the reading of the uplink packet.

23. The apparatus as claimed in claim 22, wherein the apparatus further comprises a data acquiring module, the data acquiring module is configured to:
acquire a data transmission request initiated by an application;
call a data interface corresponding to a data type contained in the data transmission request; and
generate, in response to the data interface belonging to the first processor, the downlink packet based on data received by the data interface; or, generate, in response to the data interface belonging to the second processor, the uplink packet based on data received by the data interface.

24. The apparatus as claimed in claim 22, wherein the first processor and the second processor are connected through a master interrupt interface, a slave acknowledge interface, a slave interrupt interface, a master acknowledge interface, and a data transmission interface;
the master interrupt interface is configured to transmit the master interrupt signal;
the slave acknowledge interface is configured to transmit the slave acknowledge signal;
the slave interrupt interface is configured to transmit the slave interrupt signal;
the master acknowledge interface is configured to transmit the master interrupt signal; and
the data transmission interface is configured to transmit at least one of the downlink packet and the uplink packet.

25. An electronic device, wherein the electronic device comprises a memory, a first processor, and a second processor; the memory is stored with a computer program, and the computer program is configured to, when executed by the first processor and the second processor, cause the first processor and the second processor to implement the processor communication method as claimed in any one of claims 1-14.

26. A computer-readable storage medium stored with a computer program, wherein the computer program is configured to, when executed by processors, implement the processor communication method as claimed in any one of claims 1-14.
